# EUROPEAN PATENT SPECIFICATION

(11) **EP 4 324 743 B1**
(45) Date of publication and mention of the grant of the patent: **25.11.2026**
(21) Application number: 23186665.8
(22) Date of filing: 20.07.2023
(51) Int. Cl.: B64D 13/00, F24F 11/35, F24F 11/36

(54) **SYSTEMS AND METHODS FOR MITIGATING LEAKING FLAMMABLE REFRIGERANTS**
SYSTEME UND VERFAHREN ZUR ABMILDERUNG VON UNDICHTEN ENTFLAMMBAREN KÄLTEMITTELN
SYSTÈMES ET PROCÉDÉS POUR ATTÉNUER LES FUITES DE RÉFRIGÉRANTS INFLAMMABLES

(30) Priority: 17.08.2022 US 202217889613
(43) Date of publication of application: 21.02.2024
(73) Proprietor: B/E Aerospace, Inc., Winston-Salem, NC 27105 (US)
(72) Inventor: PAPAS, Paul, West Hartford, 06117 (US); PEARSON, Matthew R., East Hartford, 06108 (US); ZIMMERMANN, Michael T., Newport Beach, CA (US); MILLS, Brian, Blue Springs, 64015 (US); SPINNER, Jacob A., Overland Park, KS, 66221 (US)
(74) Representative: Dehns

(56) References cited:
- EP-B1- 3 150 943
- US-A- 5 351 476
- US-A1- 2001 035 462
- US-B2- 11 054 171

## Description

### FIELD

The present disclosure relates to heating, ventilation, and air condition ("HVAC") systems, and more specifically to systems and methods for mitigating leaking flammable refrigerants in HVAC systems.

### BACKGROUND

With increased fluorinated gas restrictions for using current refrigerants with high global warming potential ("GWP") on aircraft, there is very significant interest in using alternative, low GWP refrigerants such as hydrofluoroolefin ("HFOs") onboard aircraft HVAC systems such as air chillers or small refrigerators. However, low GWP refrigerants can be flammable, which could be potentially harmful if a leak were to occur during operation. US 5,351,476 relates to a nacelle cooling and ventilation system.

EP 3 150 943 B1 relates to an indoor unit of an air-conditioning apparatus that performs predetermined control when refrigerant leaks from the air-conditioning apparatus. Refrigerant that has leaked into air-conditioning target space is diffused, thereby ensuring suppression of formation of a flammable area.

### SUMMARY

A heating, ventilation, and air condition (HVAC) system is provided in claim 1. The HVAC system comprises :
a housing defining an inlet port; a power source;
a plumbing system disposed in the housing, the plumbing system including a fluid conduit configured to flow a refrigerant therethrough during operation, the plumbing system including a condenser disposed proximate the inlet port; a first pressure switch operably coupled to the plumbing system; a first louvered assembly disposed proximate the inlet port; and a first solenoid operably coupled to the first louvered assembly, the first pressure switch disposed electrically between the power source and the first solenoid.

In various embodiments, the HVAC system further comprises a second louvered assembly, wherein the housing further defines an outlet port, and wherein the second louvered assembly is disposed proximate the outlet port. The HVAC system can further comprise a second solenoid operably coupled to the second louvered assembly, wherein the first pressure switch is disposed electrically between the second solenoid and the power source. The first louvered assembly and the second louvered assembly can both be configured to transition from an open configuration to a closed configuration in response to the first pressure switch opening. The first solenoid and the second solenoid can be de-energized in response to the first pressure switch opening. The first pressure switch can be configured to open in response to an operating pressure exceeding a pressure threshold.

The HVAC system can further comprise a second pressure switch disposed electrically between the first pressure switch and the first solenoid and between the first pressure switch and the second solenoid. The first pressure switch can be configured to open in response to an operating pressure falling below a first pressure threshold, and the second pressure switch can be configured to open in response to the operating pressure exceeding a second pressure threshold.

In various embodiments, the HVAC system further comprises a compressor coupled to the fluid conduit, the condenser disposed upstream of the compressor, a heat exchanger disposed downstream of the compressor, and an expansion device disposed fluidly between the condenser and the heat exchanger, wherein a pressure relief device is coupled to the compressor.

A method of operating a leakage protection system is provided in claim 6. The method comprises: biasing, via the leakage protection system, a louvered assembly into an open configuration in response to an operating pressure of a fluid conduit in a heating, ventilation, and air condition (HVAC) system being between a first pressure threshold and a second pressure threshold; closing, via the leakage protection system, the louvered assembly in response to the operating pressure of the fluid conduit falling below the first pressure threshold; and closing, via the leakage protection system, the louvered assembly in response to the operating pressure of the fluid conduit exceeding the second pressure threshold.

In various embodiments, closing the louvered assembly further comprises: de-energizing a solenoid operably coupled to an actuator rod of the louvered assembly; and closing the louvered assembly via a spring in response to the solenoid being de-energized.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the following detailed description and claims in connection with the following drawings. While the drawings illustrate various embodiments employing the principles described herein, the drawings do not limit the scope of the claims.
FIG. 1 illustrates a top-down view of an aircraft, in accordance with various embodiments.
FIG. 2 illustrates a schematic view of an HVAC system, in accordance with various embodiments.
FIG. 3 illustrates a schematic view of a leakage protection system for an HVAC system, in accordance with various embodiments.
FIG. 4A illustrates a louvered assembly for use in an HVAC system, in accordance with various embodiments.
FIG. 4B illustrates a detailed view of a portion of the louvered assembly of FIG. 4A in accordance with various embodiments.
FIG. 5 illustrates a method of use for a leakage protection system of an HVAC system, in accordance with various embodiments.

### DETAILED DESCRIPTION

The following detailed description of various embodiments herein refers to the accompanying drawings, which show various embodiments by way of illustration. While these various embodiments are described in sufficient detail to enable those skilled in the art to practice the disclosure, it should be understood that other embodiments may be realized and that changes may be made. Thus, the detailed description herein is presented for purposes of illustration only and not of limitation. Furthermore, any reference to singular includes plural embodiments, and any reference to more than one component or step may include a singular embodiment or step. Also, any reference to attached, fixed, connected, or the like may include permanent, removable, temporary, partial, full or any other possible attachment option. Additionally, any reference to without contact (or similar phrases) may also include reduced contact or minimal contact. It should also be understood that unless specifically stated otherwise, references to "a," "an" or "the" may include one or more than one and that reference to an item in the singular may also include the item in the plural. Further, all ranges may include upper and lower values and all ranges and ratio limits disclosed herein may be combined.

Disclosed herein are systems and methods for containing (and/or mitigating) accidental leaks of refrigerants (e.g., flammable refrigerants, such as HFOs) in HVAC systems. In various embodiments, the HVAC system can be for an aircraft. However, the present disclosure is not limited in this regard.

In various embodiments, the system comprises a louvered containment device and a charge isolation valve and/or an emergency pressure relief venting. In various embodiments, the system is configured to prevent refrigerant leakage forming potentially flammable concentrations outside the system when not in operation. In various embodiments, a blow off valve and a shutter system (or systems) at the condenser heat exchanger and/or exhaust ports could be closed. In this regard, refrigerant can be contained in case of a potential failure. During regular operation, installed blowers can readily dilute any potential leaks below flammability limits, in accordance with various embodiments.

In various embodiments, the system disclosed herein can be retrofitted into typical HVAC systems. In this regard, a refrigerant that is flammable can replace typical refrigerants, and the system disclosed herein can easily be retrofitted onto the current system providing leak mitigation protection, in accordance with various embodiments. In various embodiments, the system disclosed herein is passive (i.e., no sensors or electrical control components have to instruct the system to active). In various embodiments, the system disclosed herein does not utilize components that have to be replaced, maintained, and/or are life limited components. In various embodiments, the system disclosed herein does not utilize an auxiliary power source. In various embodiments, the system disclosed herein relies on leakage protection and dilution to below flammable limits in air using existing blowers during start-up / normal operation. The system disclosed herein provides leakage mitigation in response to the system being powered down (or not being in operation).

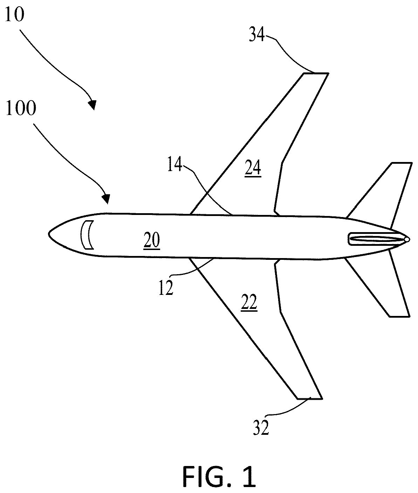

Referring now to FIG. 1, an aircraft 10 having an HVAC system 100 disposed therein is illustrated in accordance with various embodiments. The aircraft comprises a fuselage 20, wings 22, 24, each wing 22, 24 extending from a root 12, 14 disposed at the fuselage to a tip 32, 34 disposed distal to the fuselage. In various embodiments, the HVAC system 100 is disposed at least partially within the fuselage 20. In this regard, the HVAC system 100 is configured to provide cooling air into a cabin of the fuselage 20 during operation of the aircraft 10 as described further herein. Although described as being in an aircraft 10, the HVAC system 100 is not limited in this regard. For example, the HVAC system 100 can be disposed in a building, a house, a commercial residence, a private residence, or the like and still be within the scope of this disclosure.

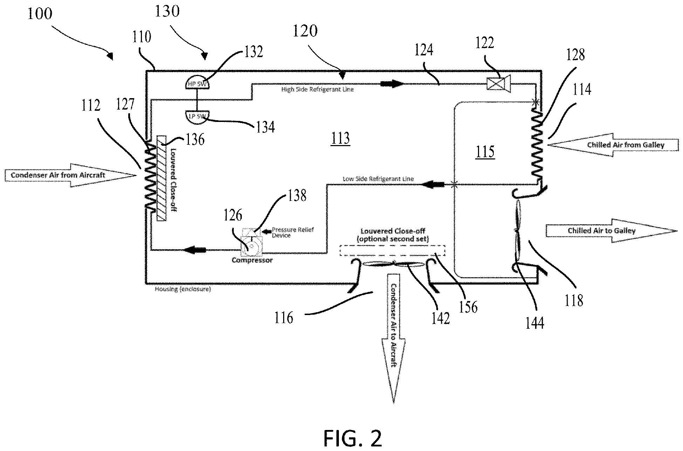

Referring now to FIG. 2, a schematic view of the HVAC system 100 is illustrated, in accordance with various embodiments. The HVAC system 100 comprises a housing 110, a plumbing system 120, a leakage protection system 130, and fans 142, 144. The plumbing system 120 is disposed within the housing 110. The housing 110 defines inlet ports 112, 114 and outlet ports 116, 118. The plumbing system 120 comprises an expansion device 122, fluid conduits 124, a compressor 126, a condenser 127 and a heat exchanger 128. The condenser 127 is disposed proximate the inlet port 112 and the heat exchanger 128 is disposed proximate the inlet port 114. The fan 142 is disposed within the outlet port 116 and the fan 144 is disposed within the outlet port 118.

In various embodiments, during operation of the HVAC system 100, air flows through the inlet port 112 (i.e., pulled in via the fan 142). In response to flowing through the inlet port 112, the refrigerant flows through the condenser 127, which adds heat to the airflow and thus heating the airflow. The heated airflow is then released out the outlet port 116 back to a cabin in the fuselage 20 of the aircraft 10 from FIG. 1. Similarly, chilled air from a galley of the aircraft 10 from FIG. 1 can be pulled through the inlet port 114 into a cavity 115 via the fan 144, and then released back into the galley through outlet port 118. In this regard, the air traveling through the inlet port 114 is cooled in a reverse manner to the airflow travelling through the inlet port 112.

In various embodiments, during operation, a refrigerant travels through plumbing system 120. In this regard, the refrigerant travels through the expansion device 122. The expansion device 122 controls an amount of refrigerant and rapidly reduces the refrigerant pressure and temperature released to an evaporator section of the plumbing system 120, in accordance with various embodiments. After going through the expansion device 122, the refrigerant travels through the heat exchanger 128 which transitions the refrigerant from a liquid state to a gas state in response to heat being absorbed from the chilled air coming from the galley of the aircraft 10 from FIG. 1. After traveling through the heat exchanger 128, the refrigerant, in the gas state, travels through the compressor 126 then upstream to the condenser 127. The compressor performs work on the refrigerant raising its pressure and temperature. Then the refrigerant travels through the condenser 127 where heat is removed from the refrigerant to condense it, and heat is transferred to the air entering the inlet port 112 by the refrigerant, which transitions back from the gas state into the liquid state.

In various embodiments, the refrigerant disposed in the plumbing system 120 comprises a low GWP refrigerant, such as hydrofluoroolefin ("HFOs"). In this regard, the refrigerant can be flammable. Accordingly, the leakage protection system 130 is configured to impede refrigerant leakage from the HVAC system 100, significantly reducing the refrigerant leakage rate to prevent or reduce leakage of the refrigerant from the housing 110 of the HVAC system while the HVAC system 100 is not in operation, or in response to the HVAC system 100 malfunctioning, as described further herein.

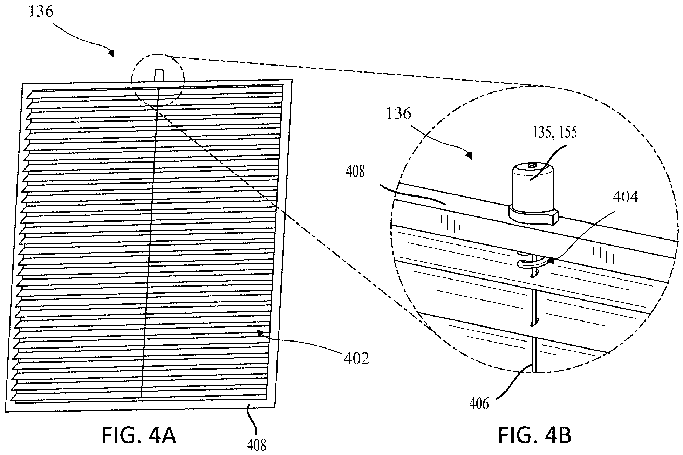

In various embodiments, the leakage protection system 130 comprises a high-pressure switch 132, a low-pressure switch 134, and a louvered assembly 136. In various embodiments, the louvered assembly 136 is coupled to the housing 110. With brief reference to FIGs. 4A and 4B, the louvered assembly 136 in an "open configuration" is illustrated, in accordance with various embodiments. In an open configuration, the slats 402 of the louvered assembly 136 are angled in a manner to fluidly couple an internal cavity 113 of the housing 110 to an external environment (e.g., a fluid conduit in fluid communication with the inlet port 112). In this regard, in the open configuration, the air from the aircraft can flow through the inlet port 112 into the cavity 113 and out the outlet port 116 as described previously herein. In various embodiments, as described further herein, the louvered assembly 136 is configured to be in an open state (i.e., the open configuration), during operation of the HVAC system 100. In this regard, the HVAC system 100 can operate normally.

In various embodiments, the high-pressure switch 132 and the low-pressure switch 134 are operably coupled to the fluid conduit 124 of the plumbing system. In various embodiments, the pressure switches 132, 134 are configured to be in a closed position during normal operation, as described further herein.

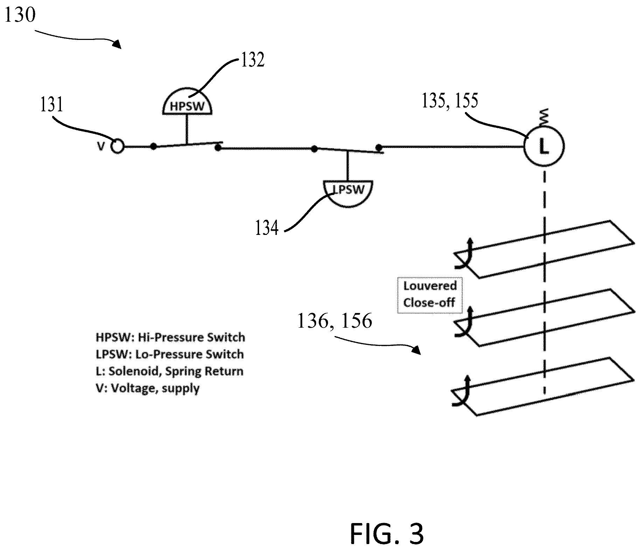

Referring now to FIG. 3, a schematic view of the leakage protection system 130 is illustrated, in accordance with various embodiments. In various embodiments, the leakage protection system 130 further comprises a power source 131 and a solenoid 135. In various embodiments, during typical operation of the HVAC system 100 from FIG. 2, the high-pressure switch 132 and the low-pressure switch 134 are in a closed position. In this regard, during typical operation of the HVAC system 100, the solenoid is electrically coupled to the power source 131. In response to the solenoid 135 being energized (i.e., in response to receiving a current from the power source 131), the solenoid actuates an actuator rod (e.g., actuator rod 406 from FIG. 4B), which compresses a spring (e.g., spring 404 from FIG. 4B). In response to the actuator rod 406 translating linearly, the slats 402 of the louvered assembly 136 (as shown in FIG. 4A) transition from a closed configuration into the open configuration.

In various embodiments, in response to the power source 131 being electrically de-coupled from the solenoid 135, the solenoid 135 becomes de-energized, and the spring 404 from FIG. 4B returns the slats 402 of the louvered assembly 136 to a closed configuration. A "closed configuration" as referred to herein is a configuration where each slat in the slats 402 of the louvered assembly 136 from FIG. 4A overlaps an adjacent slat in the slats 402 of the louvered assembly 136. In this regard, with reference back to FIG. 2, the cavity 113 within the housing 110 becomes fluidly obstructed from the fluid conduit providing the air through the inlet 112. In this regard, if refrigerant is leaking within the cavity 113 within the housing 110, the refrigerant vapor flow rate is impeded reducing the amount of refrigerant which can escape through the inlet port 112 and housing 110, in accordance with various embodiments.

With continued reference to FIG. 2, in accordance with various embodiments, the leakage protection system 130 can further comprise a second louvered assembly 156 disposed proximate the outlet port 116. In this regard, the second louvered assembly 156 can be configured to fluidly impede or isolate an external environment proximate the outlet port 116 from the internal cavity 113 in a similar manner to the louvered assembly 136, in accordance with various embodiments. In various embodiments, although illustrated as being at a lower side of the HVAC system 100, the outlet port 116 can be aligned in an upward direction. In this regard, leakage from the outlet port 116 can potentially be prevented without a second louvered assembly 156 via gravity as opposed to a second louvered assembly 156, in accordance with various embodiments. The present disclosure is not limited in this regard.

In various embodiments, the louvered assembly 156 is in accordance with the louvered assembly 136. In various embodiments, the louvered assembly 156 is coupled to the housing 110. In various embodiments, the louvered assembly 156 is operably coupled to the power source 131, the high-pressure switch 132, the low-pressure switch 134, and a solenoid 155 as shown in FIG. 3. In this regard, in a dual louvered assembly embodiment, both louvered assemblies 136, 156 can be operably coupled to the power source 131, the high-pressure switch 132, and the low-pressure switch 134, in accordance with various embodiments.

In various embodiments, the leakage protection system 130 further comprises a pressure relief device 138 coupled to the compressor 126. In various embodiments, the pressure relief device 138 is configured to release pressure from the plumbing system 120 in response to a pressure exceeding a pressure threshold in the plumbing system 120. For example, in response to the pressure in the fluid conduits 124 exceeding 350 pounds per square inch (psi) (2413,2 kPa), the pressure relief device 138 can begin to release the pressure from the plumbing system 120. In various embodiments, the pressure relief device 138 comprises a burst disk. A "burst disk" as disclosed herein is a disk that covers a fluid outlet and is configured to burst in response to a pressure experienced by the burst disk exceeding a pressure threshold.

In various embodiments, the leakage protection system 130 comprises at least one of the pressure relief device 138, the louvered assembly 136, and the louvered assembly 156. In this regard, the pressure relief device 138, the louvered assembly 136, and the louvered assembly 156 each comprise various benefits for reducing pressure and preventing leakage or reducing leakage rate to remain below flammable air mixture limits of a refrigerant due to a malfunction or after shutting down of the HVAC system 100.

Referring now to FIGs. 4A and 4B, a perspective view of a louvered assembly 136, 156 in an open position (FIG. 4A) and a detail view of a portion of the louvered assembly 136, 156 (FIG. 4B) are illustrated, in accordance with various embodiments. In various embodiments, the louvered assembly 136, 156 comprises a frame 408 at least partially defining a perimeter of the louvered assembly 136, 156. In various embodiments, the frame 408 can be coupled to a housing (e.g., housing 110) of an HVAC system 100 by any method known in the art (e.g., fasteners or the like). In various embodiments, slats 402 are spaced apart in a vertical direction, though not limited to any other orientation, within the frame 408 and operably coupled to the actuator rod 406. In various embodiments, the actuator rod 406 can be configured to twist or translate. The present disclosure is not limited in this regard. In various embodiments, the actuator rod is configured to transition the slats 402 from an open position (i.e., where adjacent slats in the slats 402 have an opening therebetween) to a closed position (i.e., where adjacent slats in the slats 402 abut each other fluidly de-coupling a first side of the louvered assembly 136, 156 from a second side of the louvered assembly 136, 156.

In various embodiments, the solenoid 135, 155 is operably coupled to the actuator rod 406 and coupled to the frame 408. The solenoid 135, 155 is configured to be electrically coupled to the pressure switches 132, 134 and the power source 131 described previously herein during normal operation. In this regard, the solenoid 135, 155 is configured to bias the actuator rod 406 in a manner that causes the spring 404 to compress, and the slats 402 into an open configuration as described previously herein. In response to being de-energized (e.g., in response to a pressure switch 132, 134 transitioning from a closed position to an open position), the actuator rod 406 is returned to a default position (i.e., where the slats 402 are closed), in accordance with various embodiments.

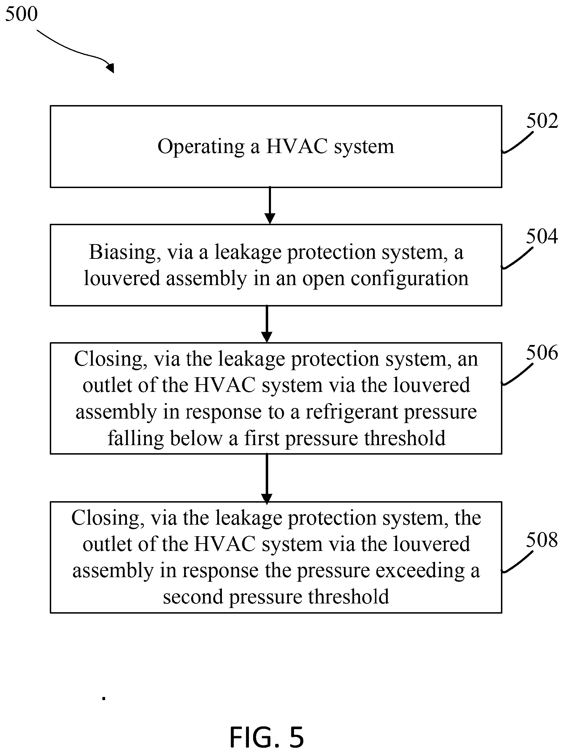

Referring now to FIG. 5, a method of operating a leakage protection system 130 for an HVAC system 100 is illustrated, in accordance with various embodiments. The method 500 comprises operating an HVAC system 100 (step 502). In response to operating the HVAC system 100 from FIG. 2, a refrigerant travels through the fluid conduits 124 of the plumbing system 120, supplying an operating pressure within the fluid conduits 124. In various embodiments, the method 500 further comprises biasing, via a leakage protection system, a louvered assembly 136, 156 into an open configuration in response to the operating pressure being within a predetermined range (e.g., between a first pressure threshold and a second pressure threshold) (step 504). In various embodiments, the first pressure threshold is meant to trip the leakage activation system in response to refrigerant leaking out of fluid conduits 124 which reduces the refrigerant pressure sensed within fluid conduit 124 as an abnormal condition. Refrigerant pressure will always be above the first pressure threshold independent of HVAC system 100 operating state being ON or OFF under normal conditions. In various embodiments, the second pressure threshold is meant to identify a malfunctioning condition where the pressure in the fluid conduits 124 exceeds the second pressure threshold. In various embodiments, the first pressure threshold can be approximate 15 pounds per square inch (psig) (103,4 kPa). In various embodiments, the second pressure threshold can be approximately 350 psig. However, the present disclosure is not limited in this regard.

The method 500 further comprises closing, via the leakage protection system 130, an outlet port of the HVAC system 100 via a louvered assembly in response to a refrigerant operating pressure falling below the first pressure threshold (step 506). In various embodiments, the louvered assembly 136, 156 is closed in response to a solenoid coupled to the louvered assembly 136, 156 being de-energized as described previously herein.

The method 500 further comprises closing, via the leakage protection system, the outlet port of the HVAC system 100 via the louvered assembly in response to the pressure exceeding the second pressure threshold (step 508). In this regard, in response to an operating pressure becoming too high and potentially creating a scenario where the fluid conduits 124 of the plumbing system 120 could break, leakage of the refrigerant outside of the housing 110 of the HVAC system 100 can be prevented, in accordance with various embodiments. In various embodiments, in response to a high-pressure situation, a pressure relief device of the compressor in the HVAC system 100 can be activated (e.g., a burst duct could burst) providing relief of pressure in the fluid conduits 124, in accordance with various embodiments.

Benefits, other advantages, and solutions to problems have been described herein regarding specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the disclosure. The scope of the invention is limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C. Different crosshatching is used throughout the figures to denote different parts but not necessarily to denote the same or different materials.

Systems, methods, and apparatus are provided herein. In the detailed description herein, references to "one embodiment," "an embodiment," "various embodiments," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether explicitly described. After reading the description, it will be apparent to one skilled in the relevant art(s) how to implement the disclosure in alternative embodiments.

As used herein, the terms "comprises," "comprising," or any other variation thereof, are intended to cover a nonexclusive inclusion, such that a process, method, article, or apparatus that comprises a list of elements does not include only those elements but may include other elements not expressly listed or inherent to such process, method, article, or apparatus.

Finally, it should be understood that any of the above-described concepts can be used alone or in combination with any or all of the other above-described concepts. Although various embodiments have been disclosed and described, one of ordinary skill in this art would recognize that certain modifications would come within the scope of this disclosure. Accordingly, the description is not intended to be exhaustive or to limit the principles described or illustrated herein to any precise form. Many modifications and variations are possible within the true scope of the invention as defined in the appended claims.

## Claims

1. A heating, ventilation, and air condition, HVAC, system, comprising:
a housing (110) defining an inlet port (112) and an internal cavity (113);
a power source (131);
a plumbing system (120) disposed in the internal cavity of the housing (110), the plumbing system including a fluid conduit (124) configured to flow a refrigerant therethrough during operation, the plumbing system including a condenser (127) disposed proximate the inlet port;
a first pressure switch (132) operably coupled to the plumbing system (120);
a first louvered assembly (136) disposed proximate the inlet port (112); and
a first solenoid (135) operably coupled to the first louvered assembly (136), wherein the first pressure switch (132) is disposed electrically between the power source (131) and the first solenoid (135);
wherein, responsive to an operating pressure falling below a first pressure threshold, the first pressure switch (132) is configured to open;
wherein, responsive to the first pressure switch (132) opening, the first solenoid (135) is de-energized; and
wherein, responsive to the first solenoid (135) de-energizing, the first louvered assembly (136) closes thereby impeding air from flowing through the inlet port (112).

2. The HVAC system of claim 1, further comprising a second louvered assembly (156), wherein the housing (110) further defines an outlet port (116), the second louvered assembly (156) disposed proximate the outlet port (116);
a second solenoid (155) operably coupled to the second louvered assembly (156), wherein the first pressure switch (132) is disposed electrically between the second solenoid (155) and the power source (131);
wherein, responsive to the first pressure switch (132) opening, the second solenoid (155) is de-energized; and
wherein, responsive to the second solenoid (155) de-energizing, the second louvered assembly (156) closes thereby impeding air from flowing through the outlet port (116).

3. The HVAC system of claim 2, wherein the first pressure switch (132) is configured to open in response to an operating pressure exceeding a pressure threshold.

4. The HVAC system of claim 2, further comprising a second pressure switch (134) disposed electrically between the first pressure switch (132) and the first solenoid and between the first pressure switch (132) and the second solenoid, and preferably wherein:
the second pressure switch (134) is configured to open in response to the operating pressure exceeding a second pressure threshold.

5. The HVAC system of any preceding claim, further comprising a compressor (126) coupled to the fluid conduit (124), the condenser disposed upstream of the compressor, a heat exchanger (128) disposed downstream of the compressor (126), and an expansion device (122) disposed fluidly between the condenser and the heat exchanger, wherein a pressure relief device is coupled to the compressor (126).

6. A method of operating a leakage protection system, comprising:
biasing, via the leakage protection system, a louvered assembly (136, 156) into an open configuration in response to an operating pressure of a fluid conduit in a heating, ventilation, and air condition (HVAC) system being between a first pressure threshold and a second pressure threshold, wherein the HVAC system comprises a housing (110) that defines an inlet port (112) and an internal cavity (113);
closing, via the leakage protection system, the louvered assembly (136, 156) in response to the operating pressure of the fluid conduit falling below the first pressure threshold;
closing, via the leakage protection system, the louvered assembly in response to the operating pressure of the fluid conduit exceeding the second pressure threshold, wherein responsive to refrigerant leaking within the cavity within the housing, air flow through the inlet port (112) is impeded, thereby reducing an amount of refrigerant which can escape from the housing.

7. The method of claim 6, wherein closing the louvered assembly further comprises:
de-energizing a solenoid operably coupled to an actuator rod of the louvered assembly; and
closing the louvered assembly via a spring in response to the solenoid being de-energized.

## Patentansprüche

1. Ein Heizungs-, Lüftungs- und Klimaanlagensystem, HVAC-System, umfassend:
ein Gehäuse (110), das einen Einlassanschluss (112) und einen Innenhohlraum (113) definiert;
eine Energiequelle (131);
ein Rohrleitungssystem (120), das in dem Innenhohlraum des Gehäuses (110) angeordnet ist, wobei das Rohrleitungssystem eine Fluidleitung (124) umfasst, die dazu ausgebildet ist, während des Betriebs ein Kältemittel durch diese hindurchzuleiten, wobei das Rohrleitungssystem einen Kondensator (127) umfasst, der in der Nähe des Einlassanschlusses angeordnet ist;
einen ersten Druckschalter (132), der mit dem Rohrleitungssystem (120) wirkverbunden ist;
eine erste Lamellenanordnung (136), die in der Nähe des Einlassanschlusses (112) angeordnet ist; und
ein erstes Magnetventil (135), das mit der ersten Lamellenanordnung (136) wirkverbunden ist, wobei der erste Druckschalter (132) elektrisch zwischen der Energiequelle (131) und dem ersten Magnetventil (135) angeordnet ist;
wobei der erste Druckschalter (132) dazu ausgebildet ist, sich zu öffnen, wenn ein Betriebsdruck unter einen ersten Druckschwellenwert fällt;
wobei das erste Magnetventil (135) als Reaktion auf das Öffnen des ersten Druckschalters (132) entregt wird; und
wobei die erste Lamellenanordnung (136) als Reaktion auf die Entregung des ersten Magnetventils (135) schließt und dadurch
den Luftstrom durch den Einlassanschluss (112) behindert.

2. Das HVAC-System nach Anspruch 1, ferner umfassend eine zweite Lamellenanordnung (156), wobei das Gehäuse (110) ferner einen Auslassanschluss (116) definiert, wobei die zweite Lamellenanordnung (156) in der Nähe des Auslassanschlusses (116) angeordnet ist;
ein zweites Magnetventil (155), das mit der zweiten Lamellenanordnung (156) wirkverbunden ist, wobei der erste Druckschalter (132) elektrisch zwischen dem zweiten Magnetventil (155) und der Energiequelle (131) angeordnet ist;
wobei das zweite Magnetventil (155) als Reaktion auf das Öffnen des ersten Druckschalters (132) entregt wird; und
wobei die zweite Lamellenanordnung (156) als Reaktion auf die Entregung des zweiten Magnetventils (155) schließt und dadurch den Luftstrom durch den Auslassanschluss (116) behindert.

3. Das HVAC-System nach Anspruch 2, wobei der erste Druckschalter (132) dazu ausgebildet ist, sich zu öffnen, wenn ein Betriebsdruck einen Druckschwellenwert überschreitet.

4. Das HVAC-System nach Anspruch 2, ferner umfassend einen zweiten Druckschalter (134), der elektrisch zwischen dem ersten Druckschalter (132) und dem ersten Magnetventil sowie zwischen dem ersten Druckschalter (132) und dem zweiten Magnetventil angeordnet ist, und vorzugsweise wobei:
der zweite Druckschalter (134) dazu ausgebildet ist, sich zu öffnen, wenn der Betriebsdruck einen zweiten Druckschwellenwert überschreitet.

5. Das HVAC-System nach einem der vorhergehenden Ansprüche, ferner umfassend einen Verdichter (126), der mit der Fluidleitung (124) verbunden ist, wobei der Kondensator stromaufwärts des Verdichters angeordnet ist, einen Wärmetauscher (128), der stromabwärts des Verdichters (126) angeordnet ist, und eine Expansionseinrichtung (122), die fluidisch zwischen dem Kondensator und dem Wärmetauscher angeordnet ist, wobei eine Druckentlastungseinrichtung mit dem Verdichter (126) verbunden ist.

6. Ein Verfahren zum Betreiben eines Leckageschutzsystems, umfassend:
Vorspannen, über das Leckageschutzsystem, einer Lamellenanordnung (136, 156) in eine geöffnete Konfiguration als Reaktion darauf, dass ein Betriebsdruck eines Fluidkanals in einem Heizungs-, Lüftungs- und Klimaanlagensystem (HVAC-System) zwischen einem ersten Druckschwellenwert und einem zweiten Druckschwellenwert liegt, wobei das HVAC-System ein Gehäuse (110) umfasst, das einen Einlassanschluss (112) und einen Innenhohlraum (113) definiert;
Schließen, über das Leckageschutzsystem, der Lamellenanordnung (136, 156) als Reaktion darauf, dass der Betriebsdruck des Fluidkanals unter den ersten Druckschwellenwert fällt;
Schließen, über das Leckageschutzsystem, der Lamellenanordnung als Reaktion darauf, dass der Betriebsdruck des Fluidkanals den zweiten Druckschwellenwert überschreitet, wobei als Reaktion auf ein Austreten von Kältemittel innerhalb des Hohlraums innerhalb des Gehäuses der Luftstrom durch den Einlassanschluss (112) behindert wird, wodurch eine Menge an Kältemittel, die aus dem Gehäuse entweichen kann, reduziert wird.

7. Das Verfahren nach Anspruch 6, wobei das Schließen der Lamellenanordnung ferner umfasst:
Entregen eines Magnetventils, das mit einer Betätigungsstange der Lamellenanordnung wirkverbunden ist; und
Schließen der Lamellenanordnung über eine Feder als Reaktion darauf, dass das Magnetventil entregt wird.

## Revendications

1. Un système de chauffage, ventilation et climatisation, CVC, comprenant :
un boîtier (110) définissant un orifice d'entrée (112) et une cavité interne (113) ;
une source d'alimentation (131) ;
un système de plomberie (120) disposé dans la cavité interne du boîtier (110), le système de plomberie comprenant un conduit de fluide (124) configuré pour faire circuler un réfrigérant à travers celui-ci pendant le fonctionnement, le système de plomberie comprenant un condenseur (127) disposé à proximité de l'orifice d'entrée ;
un premier commutateur de pression (132) couplé fonctionnellement au système de plomberie (120) ;
un premier ensemble à persiennes (136) disposé à proximité de l'orifice d'entrée (112) ; et
un premier solénoïde (135) couplé fonctionnellement au premier ensemble à persiennes (136), dans lequel le premier commutateur de pression (132) est disposé électriquement entre la source d'alimentation (131) et le premier solénoïde (135) ;
dans lequel, en réponse à une pression de fonctionnement tombant en dessous d'un premier seuil de pression, le premier commutateur de pression (132) est configuré pour s'ouvrir ;
dans lequel, en réponse à l'ouverture du premier commutateur de pression (132), le premier solénoïde (135) est désexcité ; et
dans lequel, en réponse à la désexcitation du premier solénoïde (135), le premier ensemble à persiennes (136) se ferme, empêchant ainsi l'air de circuler à travers l'orifice d'entrée (112).

2. Le système CVC de la revendication 1, comprenant en outre un deuxième ensemble à persiennes (156), dans lequel le boîtier (110) définit en outre un orifice de sortie (116), le deuxième ensemble à persiennes étant disposé à proximité de l'orifice de sortie (116) ;
un deuxième solénoïde (155) couplé fonctionnellement au deuxième ensemble à persiennes (156), dans lequel le premier commutateur de pression (132) est disposé électriquement entre le deuxième solénoïde (155) et la source d'alimentation (131) ;
dans lequel, en réponse à l'ouverture du premier commutateur de pression (132), le deuxième solénoïde (155) est désexcité ; et
dans lequel, en réponse à la désexcitation du deuxième solénoïde (155), le deuxième ensemble à persiennes (156) se ferme, empêchant ainsi l'air de circuler à travers l'orifice de sortie (116).

3. Le système CVC de la revendication 2, dans lequel le premier commutateur de pression (132) est configuré pour s'ouvrir en réponse à une pression de fonctionnement dépassant un seuil de pression.

4. Le système CVC de la revendication 2, comprenant en outre un deuxième commutateur de pression (134) disposé électriquement entre le premier commutateur de pression (132) et le premier solénoïde et entre le premier commutateur de pression (132) et le deuxième solénoïde, et de préférence dans lequel :
le deuxième commutateur de pression (134) est configuré pour s'ouvrir en réponse au fait que la pression de fonctionnement dépasse un deuxième seuil de pression.

5. Le système CVC de l'une quelconque des revendications précédentes, comprenant en outre un compresseur (126) couplé au conduit de fluide (124), le condenseur étant disposé en amont du compresseur, un échangeur de chaleur (128) disposé en aval du compresseur (126), et un dispositif de détente (122) disposé fluidiquement entre le condenseur et l'échangeur de chaleur, dans lequel un dispositif de décharge de pression est couplé au compresseur (126).

6. Un procédé de fonctionnement d'un système de protection contre les fuites, comprenant les étapes consistant à :
solliciter, via le système de protection contre les fuites, un ensemble à persiennes (136, 156) dans une configuration ouverte en réponse au fait qu'une pression de fonctionnement d'un conduit de fluide dans un système de chauffage, ventilation et climatisation (CVC) se situe entre un premier seuil de pression et un deuxième seuil de pression, dans lequel le système CVC comprend un boîtier (110) qui définit un orifice d'entrée (112) et une cavité interne (113) ;
fermer, via le système de protection contre les fuites, l'ensemble à persiennes (136, 156) en réponse au fait que la pression de fonctionnement du conduit de fluide tombe en dessous du premier seuil de pression ;
fermer, via le système de protection contre les fuites, l'ensemble à persiennes en réponse au fait que la pression de fonctionnement du conduit de fluide dépasse le deuxième seuil de pression, dans lequel en réponse à une fuite de réfrigérant à l'intérieur de la cavité à l'intérieur du boîtier, le flux d'air à travers l'orifice d'entrée (112) est entravé, réduisant ainsi une quantité de réfrigérant qui peut s'échapper du boîtier.

7. Le procédé de la revendication 6, dans lequel la fermeture de l'ensemble à persiennes comprend en outre :
la désexcitation d'un solénoïde couplé fonctionnellement à une tige d'actionnement de l'ensemble à persiennes ; et
la fermeture de l'ensemble à persiennes via un ressort en réponse à la désexcitation du solénoïde.
